# EUROPEAN PATENT APPLICATION

(11) **EP 2 043 404 A1**
(43) Date of publication of application: **01.04.2009**
(21) Application number: 07018854.5
(22) Date of filing: 25.09.2007
(51) Int. Cl.: H04W 88/08

(54) **Communication system including a home base station**

(71) Applicant: Nokia Siemens Networks Oy, 02610 Espoo (FI)
(72) Inventor: Breuer, Volker, 16727 Bötzow (DE); Centonza, Angelo, Winchester SO22 5BA (GB); Martos-Riano, Demian, 10115 Berlin (DE); Ulrich, Thomas, 67098 Bad Dürkheim (DE)
(74) Representative: Bruglachner, Thomas E.

(57) **Abstract**

The invention relates to a communication system including a home base station (HNB) having at least one radio interface for establishing a communication connection with a user equipment device (UE) camped within the range of the radio interface and having at least one second interface for establishing a communication connection with a core network (CN), wherein the home base station (HNB) is configured to forward data packets from and to the user equipment device (UE).

In order to enable an enhanced functionality of the home base station (HNB), it is proposed that said home base station (HNB) is configured to store identification data of user equipment device (UE)s and/or specific users belonging to a closed subscriber group of the base station and to provide at least one special service function for the user equipment device (UE)s belonging to said closed subscriber group.

## Description

### 1. Technical Field of the Invention

The invention relates to a communication system including a home base station according to the preamble of claim 1 and to a method for operating a communication system according to the preamble of claim 15.

### 2. Background of the Invention

The invention relates to packet data communication systems such as 3^{rd} Generation (3G) and Long Term Evolution (LTE) systems and in particular to mobile communications networks with entities comprising user equipment devices (UE) such as portable mobile phones and/or mobile computers and home base stations such as home NodeBs providing access to a core network (CN) with its services and applications. User equipment devices (UE) operating in e. g. an UMTS or LTE network may obtain diverse services according to the 3GPP standards.

With regard to the services, for all types of packet based data communication systems, the respective standards specify radio system parameters, data transfer procedures, protocols, control messages and bearer traffic exchange over the air interface or the radio interface between the portable user equipment device (UE) and the home base station or home NodeB.

One type of service which will become important in the future mobile communications networks is the multimedia broadcast multicast service (MBMS). With the help of the MBMS service, data packets can be transferred in an efficient way to multiple user equipment devices within these networks, providing mobile television, delivering subscribed multimedia services such as publications, audio and video files (broadcasts). For this purpose, a unidirectional point-to-multipoint (PTM) transmission can be applied, where user equipment devices also in idle mode can receive the transmitted network service data.

The point-to-point transmission is e. g. used to transfer MBMS specific control or user plane information as well as dedicated control or user plane information between the network and one user equipment device. The second transmission mode of the MBMS service is the MBMS point-to-multipoint control channel (MCCH). This logical channel is used for the point-to-multipoint downlink transmission of control plane information between the user equipment in radio resource control (RRC) connected or idle mode. Moreover, usual MBMS services comprise an MBMS point-to-multipoint traffic channel (MTCH) being used for a point-to-multipoint downlink transmission of user plane information between the network and the user equipment device (UE). The user plane information on the MTCH is MBMS-service-specific and is sent to user equipment devices in a cell with an activated MBMS service.

The MBMS service may further comprise an MBMS point-to-multipoint scheduling channel (MSCH). This logical channel is used for a point-to-multipoint downlink transmission of a MBMS service transmission schedule between the network and the user equipment unit. The different channels described above are mapped on specific forward access channels (FACH) or in a more general implementation scenario on a suitable downlink channel of the physical channels.

The MBMS user service announcement mechanisms allow users to request or to be informed about available MBMS services within a UMTS/LTE cell or service area. The MBMS services may comprise different kinds of audio/video data like news, sport reports, music, and video clips. Furthermore, the user equipment device is also informed about basic properties of the service during the service announcement. These can e. g. comprise encryption, forward error correction, temporary mobile group identity (TMGI) etc. The TMGI uniquely identifies one MBMS service and is usually allocated by the broadcast multicast service centre (BM-SC) which is a central server providing the MBMS services for a part of or the entire network. The TMGI is mainly used for MBMS notification purposes. With the help of the TMGI, the network can notify the user equipment device about available MBMS data that can be conveyed to the user equipment device.

The above described architecture of the MBMS services is adapted to be used in traditional mobile telecommunication systems, wherein public base stations provide access for every user equipment device kept within the cell of the base station. These base stations, which may be NodeBs, macro NodeBs or the like, are owned by the company operating the network. However, the mobile communications industry sees the emergence of so-called femto radio base stations or home base stations (home NodeBs). These base stations may be specific to one or more technology (WLAN, WiMax, GERAN, UMTS & HSPAevo or SAE/E-UTRAN) and combine properties in an unprecedented way. In particular, these home base stations or home NodeBs (HNB) convey a dual nature of a public land mobile network (PLMN) node and a user device. The HNB is a user device in the sense that it serves and is tightly related to one or more mobile users subscribed to one or more PLMNs. The range of the HNB is typically few tens of metres and the HNB may be owned by a single user or a small group of users. In this regard, the HNB has a similar nature as proprietary WLAN routers providing wireless access to the internet via a digital subscriber line (DLS). On the other hand, the HNB is part of one or more PLMN infrastructures in order to provide the subscribed services to the appropriate users. The HNB shall be a low-coast device, in particular with reduced functionality as compared to public base stations. The reduced functionality results from the fact that HNBs do not provide full support for MBMS delivery according to the standards. As a consequence, the MBMS services have to be provided by a higher level base station covering the cell of the HNB.

The HNB can only be loosely coordinated with the rest of the specific PLMN radio access network infrastructures and in general, the HNB may be switched on and off by the users, such that it does not guarantee reliable radio coverage. For this reason, the HNB cannot guarantee proper MBMS delivery in coordination with the rest of the infrastructure.

Although the above described type of proprietary base station is referred to as HNB here and in the following, it is often also called femto NodeB or home e-NodeB (e is standing for evolved). The HNB provides, for radio access purposes, femto cells or home cells. These cells may only be made available to a reduced number of users, e. g. by using an encryption on the wireless link. As a consequence, an additional name of such cells is "closed subscriber group cell" (CSG cell).

In the actual application context, a highly reduced number of user equipment devices (none, one or a few) is expected to show interest for a specific announced MBMS service.

### 3. Summary of the Invention

The invention seeks to cope with and make use of the dual nature of home base stations and/or to make use of HNB capabilities for improving the service provided to the user equipment device.

Moreover, the invention tries to implement MBMS delivering mechanisms in such a way that the mechanisms may be supported by HNBs while the MBMS transmission can be coordinated with neighbouring base stations. Further, the invention tries to make use of the HNB in such a way that it becomes a service mediator between a specific PLMN and its subscribers in the closed subscriber group (CSG) such that the HNB shall be able to provide special services such as MBMS services to the users being subscribed to such services. Furthermore, the HNB shall be used to ensure the delivery of special services by diverse means.

One aspect of the invention relates to a communication system including a home base station (HNB) having at least one radio interface for establishing a communication connection with a user equipment device camped within the range of the radio interface. The HNB has at least one second interface for establishing a communication connection with a core network (CN), wherein the home base station is configured to forward data packets from and to the user equipment device (UE).

In order to enable an enhanced functionality of the home base station (HNB), it is proposed that the home base station is usable to store identification data of user equipment devices and/or specific users belonging to a closed subscriber group (CSG) and provide at least one special service function for the user equipment devices belonging to the closed subscriber group. The special service function may in particular relate to MBMS services. Since the home base station disposes of the user identification data, it may act in almost every respect as a representative of the user equipment device towards the core network and/or the network entities providing the special service. On the other hand, the HNB may be used as a relay station distributing subscribed services to the user equipment devices belonging to the closed subscriber group based on the identification data and subscription data which may be additionally stored in the HNB.

According to further aspects of the invention, it is proposed that the home base station is configured to actively establish and interrupt communication connections relating to at least one service, the service relating to one or more specific user equipment devices belonging to a closed subscriber group. The communication connections may be established e. g. with the service providing entity in order to download subscribed data and with the user equipment device in order to provide the subscribed data as soon as the user equipment device enters the cell of the home base station. For the latter case, the home base station may in particular be configured to establish a communication connection with the user equipment device. In UMTS or LTE networks, the communication connection may be a bearer type connection. It is noted that traditionally, base stations are not bearer end points.

According to a further aspect of the invention, the home base station may be configured to use authentication and/or authorization data of at least one specific user equipment unit of the closed subscriber group (CSG) upon establishing a communication connection to a service and/or application providing unit via the core network. The HNB may than act as a subscriber towards the core network such that the user may subscribe services automatically even if he is not camped in his home cell. In particular, the home base station may be configured to generate a message for subscribing at least one service from a service provider and to transmit the message using the core network. Further, the home base station may be configured to establish a connection to the user equipment unit via the core network, e. g. in order to alert the user equipment device or the user if a direct connection using the radio interface is impossible. The alert may e. g. include the information that a special service is now available at the HNB. The home base station may e. g. be configured to generate a message informing the user equipment device about the availability of a multimedia broadcast or multicast service at another overlay cell, wherein the message may be generated only if e. g. a newly available service matches parameters reflecting the special interests of the user previously stored in the HNB together with the authentification data.

According to a further aspect of the invention, the home base station (HNB) may be configured to deliver a multimedia broadcast or multicast service to a user equipment unit using a point-to-point radio bearer terminated at the home base station. In particular, the home base station may be configured to receive control and/or configuration data from the user equipment device using the thus established radio bearer.

The home base station may be provided with a functionality which is similar to an answering machine or a multimedia set top box by configuring the HNB to store data received from the service provider and to forward the data to the user equipment device at a later time, if an immediate forwarding is impossible or unwanted.

A further important aspect of the invention is the provision of a logical functionality which will be referred to as a "home base station gateway" (HNB GW) which interacts with multiple HNBs and acts a proxy for the home base station (HNB) towards the network. The HNB GW may be a specific server or may be imbedded in the core network. If a HNB GW entity is provided, those HNBs not being capable to format MBMS specific control information such as the MCCH, the HNB GW can format this information and provide it to the HNBs.

On the other hand, the home base station gateway (HNB GW) may be configured to interact with a logical node embedding the core network functionalities relating to bearers of multimedia broadcast or multicast services in terms of control bearers and user data bearers. This logical node will be called multicast broadcast gateway (MB GW) in the following.

A further aspect of the invention relates to a method for operating a communication system of the above described type. The method is characterized by the steps of storing identification data of user equipment in the home base station and of providing at least one special service function for the user equipment devices belonging to a closed subscriber group.

The special service functions may include the subscription, unsubscription, reception and forwarding of MBMS data.

The following description of the attached drawings relates to a specific embodiment of the invention, which includes additional characterizing features in combination with the previously described features of the invention. The skilled person will see that the scope of the invention as defined in the attached claims is not limited to the specific embodiment and the specific combination of characterizing features described in the following. The skilled person will easily find other suitable combinations of the characterizing features of the invention being adapted to specific application scenarios.

### 4. Brief Description of the Drawings

Fig. 1 shows a communication system including a core network, a home base station and a user equipment device.
Fig. 2 shows an example of a message sequence chart showing how the home base station according to Fig. 1 acts as a proxy for a certain special service function A.
Fig. 3 shows an example of a message sequence chart showing how the home base station according to Fig. 1 acts as a proxy for MBMS services.

### 5. Detailed Description of the Embodiments

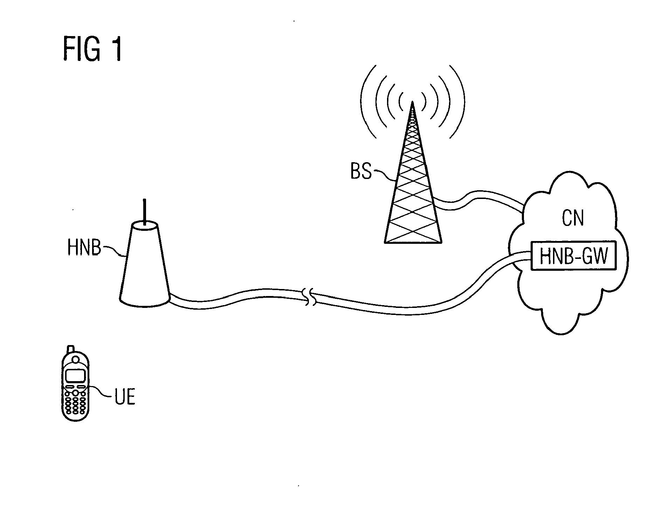

Fig. 1 shows a communication system including a home base station (HNB) having an antenna providing a radio interface for establishing a wireless communication connection with a user equipment device in the range of the radio interface. The home base station and its radio interface have a range of 10 - 50 m, such that e. g. an apartment or a house is easily covered while interferences with devices in the neighbouring houses can be avoided. The range of the home base station is covered by the range of a higher level base station BS providing public access to a PLMN in an overlay cell. The PLMN comprises a core network CN. The user equipment device UE may access multiple services such as multimedia services, video and/or music services, data services, broadcasts, email services or the like via the core network CN. The home base station HNB and the base station BS are configured to forward data packets relating to services requested by the user equipment device from and to the user equipment device.

The home base station HNB is a proprietary device which allows access to the core network, in particular for users from a closed subscriber group (CSG), e. g. by requesting a password or an encryption key from users trying to access the network via the home base station HNB. Optionally, the owner of the home base station may provide public access via the home base station HNB.

The home base station HNB comprises a memory unit (not shown) being capable and configured to store identification data of the user equipment devices and/or specific users belonging to the closed subscriber group of the home base station HNB. Moreover, the home base station HNB provides special service functions for the user equipment devices belonging to the closed subscriber group CSG, wherein the services are specified or individualized using the stored identification data.

In particular, the home base station can serve as a bearer end point and is configured to actively establish and interrupt communication connections relating to at least one service, which may e. g. be a multimedia broadcast multicast service (MBMS) to a user equipment device UE belonging to the closed subscriber group. The capability of the HNB to establish e. g. LTE bearers with a user equipment device for diverse purposes and without involvement of other network nodes allows a configuration of the home base station HNB from the user equipment device UE, the download of stored media and further novel functionalities. The bearer may be established either by the user equipment device or by the home base station HNB.

Moreover, the home base station HNB may act as a user equipment device UE or as a representative of the user equipment device towards the network. It serves as a proxy user equipment device replacing the actual user equipment device with regard to the authentication/authorization mechanisms. The home base station HNB may therefore be configured to use authentication and/or authorization data as required e. g. in the 3GPP authentication/authorization mechanisms. The home base station HNB may use the authentication and/or authorization data e. g. for establishing a communication connection and/or for subscribing a service and/or application from a service and/or application providing unit via the core network. As an example, the home base station may generate a message for subscribing a service from a service provider and to transmit the subscription message using the core network accordingly, a user equipment device UE having access to a particular home base station HNB can register the HNB to a service and service provider, which would then deliver the request to data to the registered HNB, while charging, billing and the related authorization/authentication may be done via the user equipment device belonging to the owner of the home base station. The subscribed services may either be provided to all users from the closed subscriber group or only the one having requested the service.

Depending on the implementation and on the type of the requested service UE, the charging and billing may be kept on the user equipment device, while only the delivery of the service is transferred to the HNB, or the HNB may act as a subscriber towards the network, representing and replacing the actual subscriber for the authentication/authorization mechanisms, wherein the accounting values may potentially be different from those of the user equipment unit UE of the owner of the HNB.

According to a further aspect of the invention, the home base station may establish a communication connection with the user equipment device UE via the PLMN network when direct communication is not possible, because the user equipment device is outside the range of the radio interface of the home NodeB. Such a communication connection may be using a specific ciphering key.

Some examples of the specific functions provided by the HNB according to the invention will be described in the following.

For example, the home base station HNB may serve as an MBMS recipient and media centre. A specific user may subscribe to a series of MBMS services offered by his or her operator, wherein the subscription specifies the HNB as a recipient. The HNB makes the subscribed services available for all or some users of the HNB, independently of whether they are subscribers of any operator. The HNB, not the user equipment device UE, terminates the MBMS bearer at the application level. The HNB may e. g. be the device executing a ciphering or deciphering of the received data from the network. As a consequence, the HNB may act as a kind of media store distributing the content according to an own list of recipients forming a closed subscriber group, wherein the list of recipients is stored in a memory unit of the HNB. The distribution of the services to the subscribed user equipment devices may be performed using network technologies being different from the technology of the PLMN.

Moreover, the HNB is able to establish packet connections on behalf of the user for common data network purposes (email download, data download, agents activation, etc.) by using the identification/ahthentification data.

A further special function provided by the HNB relates to the HNB serving as a push-services recipient. Push-services may terminate at the HNB instead of at the user equipment device to be later on made available by other means (e. g. upon a download request from the UE) to the subscriber of the services. The data received from the push-services may be downloaded to the user equipment device itself or on another device.

Moreover, the HNB may function as a callee, wherein an incoming call may e. g. be stored as in an answering machine, or be forwarded in a local call transfer within the home area. When a user is paged in a HNB cell and this is accordingly configured, the HNB can establish a call either with a third party, especially within the home area, or with an own embedded answering machine. In this configuration, the HNB terminates all signalling from the network to the user equipment device on its own and provides a continuation to the services according to the subscriber's configuration.

Moreover, the HNB may act as a device controlled by the user equipment device. The user equipment device is able to establish a communication to its own home base station over the PLMN network and for diverse purposes, such as configuration of the proxy role, configuration of other parameters or else execution of applications allowing remote control of other devices in the home area. For this purpose, the HNB may establish a communication connection between the user equipment device and the external device in the home area.

The above described features require some new functionalities of the home base station, which will be described below.

For the different applications to be terminated by the home base station HNB, the device has valid ciphering keys. The home base station has an own, unique identifier equivalent to an international mobile equipment identity IMEI, differing however in nature with the classical mobile terminals IMEI. The HNB's IMEI, which shall be called H-IMEI, can be told apart from the standard IMEI of user equipment devices by the core network, such that the core network or PLMN may use H-IMEI-derived keys for the communication, when the HNB is proxying the UE.

Those keys related to the subscribed MBMS services are considered separately. Different approaches may be applied depending on the circumstances. The keys may be obtained from the user equipment device UE and then the user equipment device UE may be proxied by the HNB for MBMS purposes. Moreover, the user equipment device may request a network controller to provide an H-IMEI to the HNB. Further, the HNB may request and obtain ciphering keys from the broadcast multicast service centre, such that the BM-SC may verify that the service will be made available via the HNB instead of being directly visible in the user equipment device.

In terms of network communication, a novel situation arises when the user equipment device communicates over the PLMN with its own HNB. The HNB is not any proxying the user equipment device, but the PLMN establishes a communication between the user equipment and the home base station. In this context, the PLMN verifies during the communication its establishment that such a communication is properly authorized.

In the PLMN, it may be necessary to have the equivalent of a home base station (HNB) register with diverse information the HNB configuration and H-IMEI. It may also be necessary that this entity, which can also be called a home base station gate way (HNB GW) tracks the configuration of the HNB in its configuration as proxy for the different call establishments.

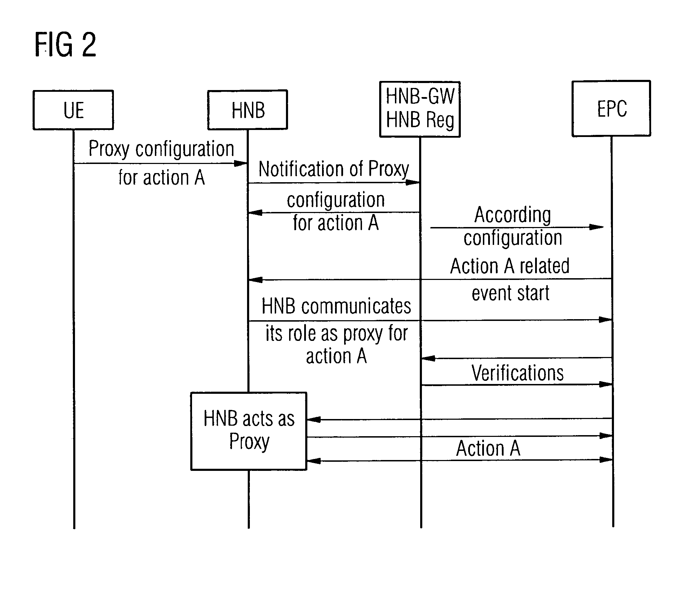

Fig. 2 shows an example of a message sequence chart showing how the home base station acts as a proxy for a certain action A.

In a first message, the user equipment device establishes a connection for the proxy configuration for the specific action A. In a second step, the HNB notifies the HNB GW in the call network of its proxy configuration for the action A, and the HNB GW acknowledges the proxy configuration in a reply to the HNB. The HNB GW may forward e. g. subscription information to a unit EPC providing the content of the MBMS. Upon the start of an event relating to the subscribed action A, the unit EPC notifies the HNB, and the HNB communicates its role as a proxy for the action A to the unit EPC. The EPC verifies the authentification of the HNB at the HNB GW and starts establishing a communication connection with the HNB acting as a proxy for the certain action A.

Considering the mobility of the user equipment device in this context, and the fact that the HNB has no correct overview of this mobility, since it cannot necessarily distinguish between the states "UE is switched off" and "UE is not at home", the EPC continues to be under full responsibility of the mobility and tracking mechanism. Thus, it distinguishes between the cases where the user equipment device is in the home cell, where the user equipment device is somewhere else in idle or active mode, traceable under a specific tracking area, when the user equipment device is turned off and when the user equipment device is in another HNB's cell.

The proxy configuration may be chosen such that the EPC will address the HNB in the case where it is camped in its home cell anyway, but will possibly address the user equipment device directly in one of the remaining cases.

As a consequence, the user equipment device may be related to several home base stations and be subscribed to several closed subscriber groups and may have a configuration for a certain action A (e. g. call redirection when busy) depending on its location. Eventual conflicts in the manual configuration performed by the user are identified and indicated to the subscriber e. g. by debugging the proxy configuration. This takes place at the application level or user interface level and does not necessarily have to be addressed at the network level.

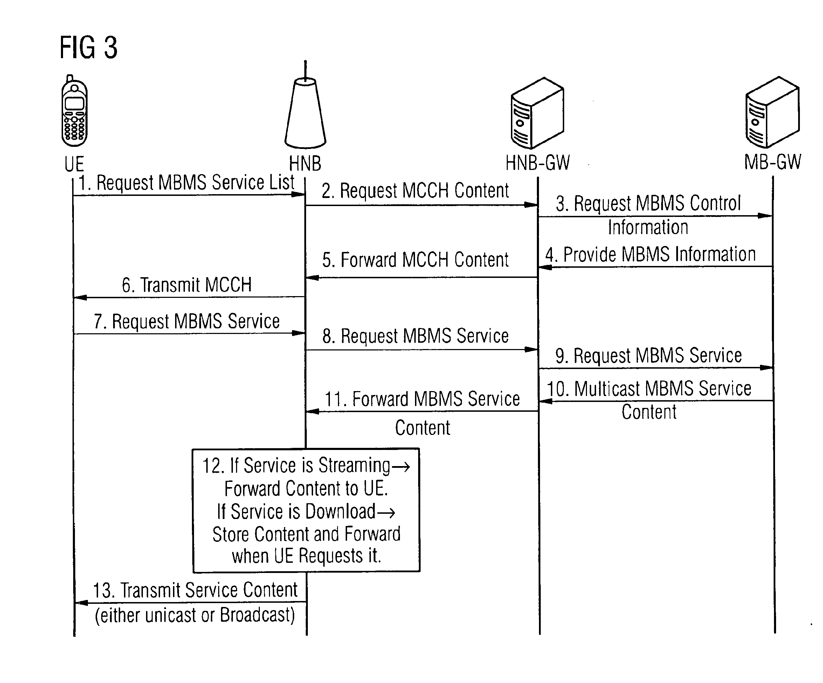

A more specific application of the above described scenario will be described in the following, with reference to Fig. 3, wherein the special service provided by the HNB is an MBMS service. Automatically or upon request of an MBMS service list, the HNB requests the MCCH content from the HNB GW, which in turn requests the MBMS control information form the MB GW. The MB GW provides the MBMS control information to the HNB GW, which forwards the requested MCCH content to the HNB. The HNB transmits the MCCH content to the user equipment device UE. The user may select and MBMS service and request the MBMS service from the HNB, which forwards the request to the HNB GW. The HNB GW forwards the request to the MB GW, which provides the multicast MBMS service content requested by the OE to the HNB GW. The HNB GW forwards the MBMS service content to the HNB. Depending on the configuration, the HNB may either forward the content to the user equipment device UE, or it may store the content and forward it when the user equipment device UE requests it. The HNB may transmit the service content either as unicast, multicast or broadcast content to one or more of the user equipment devices in the cell of the HNB, or to the user equipment devices registered in the closed subscriber group. The HNB GW may provide MBMS services to multiple HNBs and embeds the PLMN core network functionalities related to the MBMS bearer in terms of control bearer and user data bearer.

As described above, the HNB GW becomes the distribution point towards the HNBs for MCCH content and for MBMS service content.

Since the HNB does not necessarily provide MCCH by default, the user equipment devices do not have the opportunity of seeing the list of available services unless they access the overlay cell. However, the user equipment devices are able to send a request to the HNB for MBMS services without specifying a particular service. The HNB is not bound to the MBMS control plane, i. e. no resource allocation, scheduling etc. is imposed on the HNB as the HNB does not support further MBMS channels, such as MTCH.

Since the HNB uses the HNB GW, which in turn contacts the MB GW following the procedures defined for macro base stations, the HNB GW acts as a proxy for the HNB.

The above described procedure may also be useful, if the HNB supports MBMS like conventional NodeB for scalability reasons. If many HNBs per HNB GW are requesting MBMS, it is preferable to introduce a MBMS proxy function at the HNB GW.

By receiving the MCCH content, the user equipment device acquires information about how the MBMS services are transmitted by overlaying NodeBs, e. g. in single frequency network (SFN) conditions (i. e. allocated TTIs per service, transmission period etc.). The user equipment device may use this information for synchronization purposes during handovers in cases where the user equipment device moves outside the CSG cell of the HNB while consuming an MBMS service, which is also available outside the cell of the home base station by means of overlay cells. Moreover, the user equipment device may be configured to receive the MBMS content by listening to the overlay cell instead of the HNB, if this is preferable for some reason.

If the UE has received the MCCH and if the reception is preferred over the HNB's SCG cell, the UE may request the services as described above. If the content is a live service, which has to be used immediately, the HNB GW will forward the content to the HNB, which will start transmitting within its cell either in point-to-point or in point-to-multipoint according to the supported transmission modes, the interested user equipment devices and the proxy configuration of the HNB.

The above described store and forward service may be used if the MBMS service is not a live service, e. g. in the case of periodic MBMS services, like video on demand or subscribed publications. As a consequence, the HNB may receive the subscribed contents periodically even if the user equipment devices did not immediately request them.

The user equipment device UE can request the cached service at any time from the HNB as a local MBMS service, i. e. without the HNB connecting to the network and retrieving the MBMS information. Alternatively, the HNB can propose or check with the user equipments in its cell, if a certain service session has been received already when the user equipment UE has been out of the home cell, if not, deliver it.

An important point of the invention is that the HNB can interact with the network, even without being triggered by the user equipment device UE. In this sense, the HNB acts toward the network as a user equipment device.

## Claims

1. Communication system including a home base station (HNB) having at least one radio interface for establishing a communication connection with a user equipment device (UE) camped within the range of the radio interface and having at least one second interface for establishing a communication connection with a core network, wherein the home base station (HNB) is configured to forward data packets from and to the user equipment device (UE), **characterized in that** said home base station (HNB) is configured to:
- store identification data of user equipment device (UE)s and/or specific users belonging to a closed subscriber group of the base station and
- provide at least one special service function for the user equipment device (UE)s belonging to said closed subscriber group.

2. Communication system according to claim 1, **characterized in that** the home base station (HNB) is configured to actively establish and interrupt communication connections relating to at least one service relating to a user equipment device (UE) belonging to a closed subscriber group.

3. Communication system according to claim 2, **characterized in that** the home base station (HNB) is configured to establish a communication connection with the user equipment device (UE).

4. Communication system according to claim 3, **characterized in that** said communication connection is a bearer connection.

5. Communication system according to one of the preceding claims, **characterized in that** the home base station (HNB) is configured to use authentication and/or authorization data of at least one specific user equipment unit of the closed subscriber group upon establishing a communication connection to a service and/or application providing unit via the core network (CN).

6. Communication system according to at least one of the preceding claims, **characterized in that** the home base station (HNB) is configured to generate a message for subscribing at least one service from a service provider and to transmit the message using the core network (CN).

7. Communication system according to at least one of the preceding claims, **characterized in that** the home base station (HNB) is configured to establish a connection to the user equipment unit via the core network (CN) if a direct connection using the radio interface is impossible.

8. Communication system according to at least one of the preceding claims, **characterized in that** the home base station (HNB) is configured to generate a message informing the user equipment device (UE) about the availability of a multimedia broadcast or multicast service at another overlay cell.

9. Communication system according to claim 8, **characterized in that** the home base station (HNB) is configured include information relating to a radio reception of said multimedia broadcast or multicast service into said message informing the user equipment device (UE) about the availability of a multimedia broadcast or multicast service.

10. Communication system according to at least one of the preceding claims, **characterized in that** the home base station (HNB) is configured to deliver a multimedia broadcast or multicast service to a user equipment unit using a point-to-point radio bearer terminated at the home base station (HNB).

11. Communication system according to claim 10, **characterized in that** the home base station (HNB) is configured to receive control and/or configuration data from the user equipment device (UE) using said radio bearer.

12. Communication system according to at least one of the preceding claims, **characterized in that** the home base station (HNB) is configured to store data received from a service provider and to forward the data later if an immediate forwarding is impossible or unwanted.

13. Communication system according to at least one of the preceding claims, **characterized in that** the home base station (HNB) is configured to interact with a home base station (HNB) - gateway in the core network (CN), wherein the home base station (HNB) - gateway is configured to act as a proxy device for one or more home base station (HNB)s towards the network.

14. Communication system according to claim 13, **characterized in that** the home base station (HNB) - gateway is configured to interact with a logical node embedding the core network (CN) functionalities relating to bearers of multimedia broadcast or multicast services in terms of control bearers and user data bearers.

15. Method for operating a communication system including a home base station (HNB) having at least one radio interface for establishing a communication connection with a user equipment device (UE) camped within the range of the radio interface and having at least one second interface for establishing a communication connection with a core network (CN), wherein the home base station (HNB) is configured to forward data packets from and to the user equipment device (UE), **characterized by** comprising the steps of:
- storing identification data of user equipment device (UE)s and/or specific users belonging to a closed subscriber group of the base station in a memory unit of the base station and
- providing at least one special service function for the user equipment device (UE)s belonging to said closed subscriber group.
